# DEMANDE DE BREVET EUROPEEN

(11) **EP 0 810 593 A1**
(43) Date de publication de la demande: **03.12.1997**
(21) Numéro de dépôt: 97401185.0
(22) Date de dépôt: 29.05.1997
(51) Int. Cl.: G11B 7/26, G11B 23/38

(54) **Procédé de fabrication d'un disque maître pour la réalisation de matrices de pressage de disques optiques comportant un marquage, notamment antipiratage, disque maître, matrice de pressage et disque optique obtenus**

(30) Priorité: 31.05.1996 FR 9606761
(71) Demandeur: DIGIPRESS, F-14000 Caen (FR)
(72) Inventeur: Andre, Pascal, 14780 Lion sur Mer (FR); Ledieu, Jean, 78121 Crespieres (FR)
(74) Mandataire: Beauchamps, Georges

(57) **Abrégé**

L'invention concerne un procédé de fabrication d'un disque maître pour la réalisation de matrice de pressage de disques optiques comportant un marquage, notamment anti-piratage.

Ce procédé consiste à interposer, entre le plateau tournant (3) d'une machine d'enregistrement d'informations et un support (1) revêtu d'une couche de résine photosensible (2), une couche (7) formée par des zones de réflectivités différentes pour les longueurs d'onde du faisceau lumineux (4) servant à l'enregistrement des informations et définissant un marquage (8).

L'invention trouve application, en particulier, dans le domaine de la fabrication de disques optiques comportant un marquage.

## Description

L'invention concerne un procédé de fabrication d'un disque maître pour la réalisation de matrices de pressage de disques optiques comportant un marquage, notamment anti-piratage. Elle concerne également le procédé de fabrication de la matrice de pressage et du disque optique comportant un marquage, notamment anti-piratage ainsi que le disque maître, la matrice de pressage et le disque optique obtenus par ces procédés.

Actuellement, afin de permettre au consommateur d'identifier la nature du programme qu'un disque optique contient, on appose sur une face de ce disque optique une étiquette comportant en clair ces informations.

Ce qui implique au moins deux étapes supplémentaires dans le procédé de fabrication d'un disque maître consistant d'une part à fabriquer ces étiquettes et d'autre part à les déposer sur le disque optique.

Par ailleurs, pour distinguer un original de sa copie non autorisée, différents codes peuvent être apposés sur le disque optique.

L'usage le plus répandu consiste à faire figurer soit en clair, soit sous la forme de codes-barres, un ou plusieurs codes dans la bande d'identification du disque compact. Ces codes peuvent exprimer la référence de l'éditeur, la référence de la société ayant effectué la fabrication du disque maître et/ou de la matrice de pressage et la référence de la société ayant effectué le pressage, et ce suivant la place disponible sur cette bande d'identification et les conventions prises entre les différents intervenants.

Cependant, ces informations sont de très petites tailles car situées dans la bande d'identification et ne pouvant en aucun cas aller en recouvrement de la surface utilisée pour la zone programme (les informations à lire dans le lecteur de disques optiques).

Cela les rend difficiles à lire et à interpréter. Ainsi, le consommateur final est très rarement à même de reconnaître du premier coup d'oeil l'origine des disques compacts qu'il achète soit parce que ces informations ne sont pas facilement visibles, soit parce que les codes sont trop hermétiques.

L'invention vise à pallier ces inconvénients en permettant d'obtenir un disque optique comportant un marquage visible à l'oeil nu, mais non détectable par un appareil de lecture de disques optiques, c'est-à-dire qui n'affectera pas la lecture des programmes et de plus sera non copiable. Ce marquage est de taille suffisante pour permettre au consommateur de parfaitement et immédiatement, lors de son achat, identifier la nature du programme contenu dans le disque optique et/ou vérifier l'authenticité d'un disque compact.

Dans ce qui suit, le terme "marquage" désignera tout motif voulu représentant soit des informations permettant d'identifier la nature du programme que le disque optique contient, soit un motif spécifique permettant de vérifier l'authenticité d'un disque optique. Le terme "marquage" englobe également le cas dans lequel le motif réalisé permettra à la fois d'identifier la nature du programme que le disque optique contient et de vérifier l'authenticité du disque optique.

A cet effet, l'invention propose un procédé de fabrication d'un disque maître pour la réalisation d'une matrice de pressage de disques optiques comportant un marquage du type consistant à :
déposer sur une face d'un support une couche de résine photosensible ;
déposer ce support muni de la couche de résine photosensible sur le plateau tournant d'une machine d'enregistrement ;
enregistrer les informations à dupliquer et à lire dans le lecteur de disques optiques, sous la forme d'une image latente, dans la couche de résine photosensible, par défilement d'un faisceau lumineux approprié ;
éliminer les zones de résine photosensible insolées, cette élimination menant à la création d'une succession de microcuvettes représentatives de l'information à dupliquer et à lire dans le lecteur de disques optiques, caractérisé en ce que,
avant de procéder à l'étape d'enregistrement des informations, à dupliquer et à lire dans le lecteur de disques optiques, on interpose, entre le plateau tournant la machine d'enregistrement et le support revêtu de la résine photosensible, une couche formée de zones d'un premier matériau et de zones d'un second matériau, de réflectivités différentes pour les longueurs d'onde dudit faisceau lumineux d'enregistrement, ces zones de réflectivités différentes définissant un marquage.

Selon un premier mode de mise en oeuvre du procédé de l'invention, ledit marquage est constitué par des zones réfléchissantes d'un premier matériau réfléchissant pour les longueurs d'onde du faisceau lumineux d'enregistrement et de zones non réfléchissantes d'un second matériau non réfléchissant pour les longueurs d'onde du faisceau lumineux d'enregistrement, les zones réfléchissantes de premier matériau réfléchissant représentant en positif le marquage.

Selon un autre mode de mise en oeuvre du procédé de l'invention, le marquage est constitué par des zones réfléchissantes d'un premier matériau réfléchissant pour les longueurs d'onde du faisceau lumineux d'enregistrement et des zones non réfléchissantes d'un second matériau non réfléchissant pour le faisceau lumineux d'enregistrement, lesdites zones de second matériau non réfléchissant pour le faisceau lumineux d'enregistrement représentant en positif le marquage.

Selon une variante des deux modes précédents de mise en oeuvre du procédé de l'invention, ledit second matériau non réfléchissant est absent, créant ainsi lesdites zones non réfléchissantes.

Selon encore un autre mode de mise en oeuvre du procédé de l'invention, le marquage est constitué par des zones d'un premier matériau plus réfléchissant et des zones d'un second matériau moins réfléchissant pour le faisceau lumineux d'enregistrement, les zones de premier matériau plus réfléchissant représentant en positif le marquage.

Selon toujours un autre mode de mise en oeuvre du procédé de l'invention, le marquage est constitué par des zones d'un premier matériau plus réfléchissant et des zones d'un second matériau moins réfléchissant pour le faisceau lumineux d'enregistrement, les zones de second matériau moins réfléchissant représentant en positif le marquage.

Selon une variante du procédé de fabrication d'un disque maître de l'invention, la couche formant le marquage est formée sur une plaque support indépendante.

Elle peut aussi être formée directement sur le support du disque maître, sur la face de ce support opposée à celle comportant la couche de résine.

Elle peut encore être formée directement sur le plateau tournant de la machine d'enregistrement.

Les différents modes de réalisation et variantes du procédé de fabrication d'un disque maître de l'invention peuvent de plus comprendre, après l'étape d'élimination des zones de résine insolées, les étapes suivantes :
transfert dans le support des microcuvettes obtenues par ladite étape d'élimination, et
élimination des zones de résine résiduelle.

Le disque maître obtenu par les différents modes de réalisation et variantes du procédé de fabrication d'un disque maître selon l'invention est également un objet de l'invention.

L'invention concerne également un procédé de fabrication d'une matrice de pressage de disques optiques comportant un marquage caractérisé en ce qu'il comprend la fabrication d'un disque maître selon le procédé de l'invention et/ou l'utilisation du disque maître obtenu par le procédé de fabrication d'un disque maître de l'invention.

L'invention vise aussi la matrice de pressage ainsi obtenue.

L'invention vise encore un procédé de fabrication d'un disque optique comportant un marquage caractérisé en ce qu'il comprend la fabrication ou l'utilisation d'un disque maître et/ou d'une matrice de pressage selon l'invention.

Le disque maître ainsi obtenu fait également partie de l'invention.

D'autres buts, détails et avantages de la présente invention apparaîtront plus clairement à la lecture de la description détaillée qui va suivre faite en référence aux dessins annexés dans lesquels.

La figure 1 représente schématiquement le procédé de fabrication d'un disque maître selon l'art antérieur.

La figure 2 représente schématiquement les différentes étapes d'une variante d'un procédé de fabrication d'un disque maître selon l'invention.

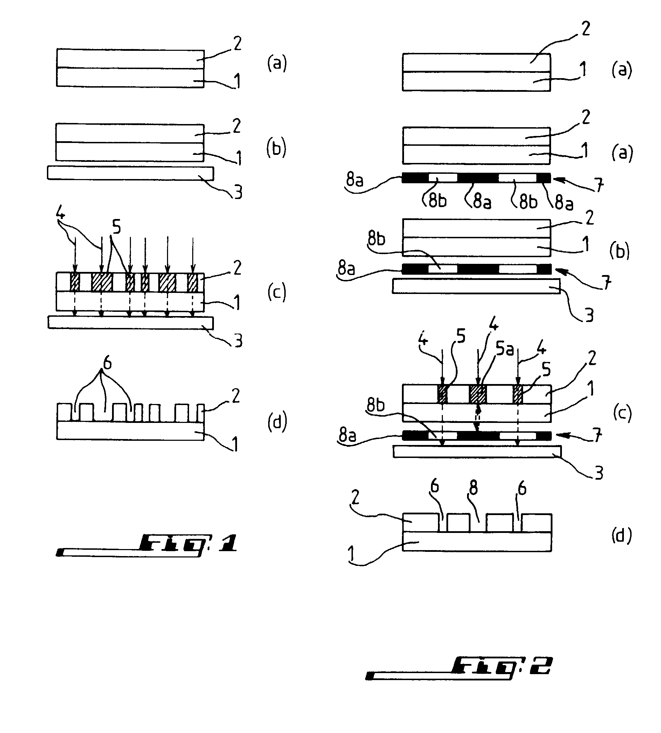

Dans la figure 1 annexée, le procédé de fabrication d'un disque maître selon l'art antérieur consiste, dans l'étape notée (a), à déposer une couche de résine photosensible de type positif sur un support 1 en général en verre.

Puis, comme illustré, à l'étape notée (b) dans la figure 1, ce support 1 revêtu de la couche de résine photosensible est placé sur le plateau tournant 3 de la machine d'enregistrement.

A l'étape notée (c), les informations à dupliquer et qui seront lues ultérieurement par un lecteur de disques optiques (le programme), sont enregistrées, sous forme d'image latente, dans la couche de résine photosensible 2 par défilement d'un faisceau lumineux 4 approprié, en général un faisceau laser. On obtient alors, comme illustré à l'étape notée (c), des zones de résine insolées 5.

Lors de cet enregistrement, et comme illustré par les flèches en pointillé à l'étape (c) de la figure 1, le faisceau 4 laser traverse successivement la couche de résine, la faisant changer de nature, au point de focus du laser, et est absorbé par le plateau tournant 3 de la machine d'enregistrement.

Ensuite, à l'étape de développement de la résine, notée (d) dans la figure 1, les zones de résine insolées 5 sont éliminées par tout moyen connu de l'homme de l'art. Cela mène à la création dans la couche de résine photosensible de microcuvettes 6 représentatives des informations à dupliquer et à lire dans un lecteur de disques optiques.

On a alors obtenu un disque maître qui comporte à sa surface une succession de microcuvettes représentatives en positif des informations (le programme) à dupliquer.

A partir de ce disque maître, on réalise une matrice de pressage, généralement en nickel, qui comportera à sa surface une succession de micro-reliefs, correspondant en négatif aux microcuvettes 6 précédemment décrites.

Cette matrice de pressage servira ensuite à presser des disques optiques, généralement en polycarbonate, comportant une succession de microcuvettes qui sont la réplique des microcuvettes 6.

Le disque optique est ensuite revêtu d'une fine couche métallique réfléchissante, ce qui permettra au faisceau lumineux émis par le lecteur de disque compact de lire les informations.

Comme déjà noté, lors de l'étape notée (c) d'enregistrement des informations, sous forme d'image latente, dans la couche de résine photosensible 2, le faisceau laser 4 insole la zone appropriée de résine, traverse le support 1 en verre et est absorbé par le plateau tournant de la machine.

L'invention repose sur la phénomène suivant : si l'on interpose entre plateau tournant 3 de la machine d'enregistrement et le support 1 du disque maître, revêtu de la couche de résine photosensible 2, une couche formée d'au moins deux matériaux de réflectivités différentes, menant ainsi à la création d'au moins deux types de zones de réflectivité différentes représentant un marquage, le faisceau laser est réfléchi, par ces zones de réflectivités différentes, retraverse le support et revient réinsoler la résine, au même endroit en raison de la vitesse de la lumière émise par le faisceau laser d'enregistrement, qui bien évidemment est plus élevé que la vitesse de rotation du plateau tournant 3.

Donc, si l'on met entre le support 1 et le plateau tournant 3 une couche formée de plusieurs zones de réflectivités différentes représentant un marquage, le faisceau laser réfléchi réinsole la résine et ce marquage se verra au développement des microcuvettes : en effet, les microcuvettes qui ont reçu plus de lumière seront plus ouvertes que les autres pour un même temps de développement (élimination des zones de résine insolées illustrées à l'étape (d)).

Ce phénomène a été utilisé dans l'invention afin d'introduire sur le disque maître et donc, la matrice de pressage obtenue à partir de ce disque maître et en final le disque optique obtenu à partir de cette matrice de pressage, un marquage.

Afin de mieux faire comprendre l'invention, on va maintenant en donner à titre d'exemples purement illustratifs et non limitatifs plusieurs modes de réalisation.

Tout d'abord, en se référant à la figure 2 annexée, un mode de réalisation du procédé de fabrication d'un disque maître pour la réalisation d'une matrice de pressage de disques optiques comportant un marquage selon l'invention sera décrit.

La première étape notée (a) dans la figure 2 est identique à celle du procédé de l'art antérieur : on dépose sur un support 1, en général en verre, une couche 2 de résine photosensible type positif.

Mais ici, à la différence du procédé de l'art antérieur illustré en figure 1, et comme illustré à l'étape notée (a') dans la figure 2, on dépose ce support 1, revêtu de la couche de résine photosensible 2, au-dessus d'une couche 7 formée par des zones réfléchissantes notées 8a et des zones non réfléchissantes notées 8b. Les zones 8a et 8b définissent le marquage voulu.

Le marquage peut être une simple présentation du programme que le disque optique contient. Cependant, dans ce cas, ce marquage devra pouvoir être visualisé à partir de la face du disque optique, obtenu en final grâce au procédé de l'invention, sur laquelle on appose, dans l'art antérieur, l'étiquette remplissant la fonction du marquage de l'invention, à savoir, la présentation du programme que le disque optique contient.

A cet effet, il ne doit pas y avoir de dépôt d'une quelconque étiquette sur cette face du disque. En fait ici le dépôt de l'étiquette n'est plus nécessaire sur le disque optique de l'invention.

Ce marquage peut également être un logo, une série de lettres, de chiffres, un hologramme ou toute autre graphisme identifiant les différents intervenants, c'est-à-dire, l'éditeur, la société ayant effectué la fabrication du disque maître et/ou de la matrice de pressage, la société ayant effectué le pressage etc., c'est-à-dire un marquage anti-piratage.

Dans ce dernier cas, le dépôt d'une étiquette sur le disque optique est possible, car le marquage anti-piratage sera visible sur la face du disque optique opposée à celle sur laquelle on dépose, dans l'art antérieur, l'étiquette destinée à présenter la nature du programme que le disque optique contient. Ainsi, on peut réaliser le dépôt d'ailleurs devenu nécessaire de cette étiquette.

Il faut cependant noter que dans tous les cas, le marquage est visible à partir des deux faces du disque optique dans la mesure où aucune étiquette n'y est déposée. Le marquage peut être à la fois une présentation du programme que le disque optique contient et un signe distinctif anti-piratage.

De plus, à la différence des marquages anti-piratage de l'art antérieur, les marquages de l'invention peuvent couvrir toute la surface disponible du disque optique à obtenir en final, sans altérer l'épaisseur de la couche de résine photosensible et sans affecter les plages de résine non insolées. Cela est également vrai lorsque le marquage a pour but de présenter le programme contenu dans le disque optique.

Ce marquage sera donc d'une taille suffisante pour être vu et clairement identifié par le consommateur final.

Ensuite, à l'étape notée (b) de la figure 2, la couche 7 et le support 1 muni de la couche de résine 2 sont déposés, comme dans l'art antérieur sur le plateau tournant 3 d'une machine d'enregistrement d'informations.

Ici la couche 7 est formée sur une plaque support indépendante (non représentée) afin de lui donner la rigidité et les propriétés mécaniques nécessaires.

Il n'est pas ici nécessaire de modifier de quelque manière que ce soit la machine d'enregistrement classique.

Lors de l'enregistrement des informations sous forme d'image latente dans la couche de résine 2, le faisceau laser 4, modulé en fonction des informations à enregistrer et à lire par le lecteur de disques optiques, et comme illustré par les flèches en pointillé à l'étape notée (c) dans la figure 2, traversera la couche 2 de résine photosensible en l'insolant dans certaines zones définies, menant ainsi à la formation de zones notées 5 de résine insolées représentatives de l'information, et également le support 1 en verre. Ensuite, le faisceau atteint la couche 7. S'il rencontre une zone 8a réfléchissante de cette couche 7, le faisceau sera réfléchi, retraversera le support en verre 1 et réinsolera la résine photosensible 2 dans les zones déjà insolées. Ce phénomène est illustré en figure 2 par des flèches en pointillé légèrement décalées pour des raisons de clarté de la figure. A l'inverse, si le faisceau laser rencontre des zones 8b non réfléchissantes, il sera soit absorbé par ces zones 8b non réfléchissantes soit il traversera ces zones non réfléchissantes pour être ensuite absorbé par le plateau tournant 3 de la machine d'enregistrement.

Ainsi, comme illustré à la figure 2, on obtient un support 1 revêtu d'une couche de résine 2 comportant à sa surface des zones de résine, notées 5a, insolées deux fois, représentatives du marquage et des informations à dupliquer et des zones 5 de résine insolées une seule fois représentatives uniquement des informations à dupliquer.

Ensuite, la résine est développée, c'est-à-dire que l'on élimine les zones de résine insolées. On obtiendra alors comme illustré à l'étape (d), un disque maître constitué du support 1 comportant à sa surface des microcuvettes 6 représentatives de l'information à dupliquer et des microcuvettes 8, correspondant aux zones de résine 5a insolées deux fois, représentatives du marquage et des informations à dupliquer.

Dans la figure 2, la modification des microcuvettes insolées 2 fois et notées 5a a été volontairement exagérée pour mieux montrer le phénomène.

Mais, les modifications apportées par le faisceau laser réfléchi par les zones réfléchissantes de la couche 7 sont très faibles et dans les normes de tolérance actuelles imposées sur la taille des microcuvettes 6, afin de ne pas perturber la lecture des informations dont ces microcuvettes sont représentatives.

Ce qui signifie qu'un appareil électronique de lecture ne les détectera pas et ainsi, le marquage ne pourra pas être copié.

L'homme de l'art connaît ces normes de tolérance, qui peuvent varier avec les avancées de la technique de fabrication des disques maîtres. Mais ces modifications même très faibles à l'ordre microscopique sont parfaitement visibles à l'échelle macroscopique.

Dans le mode de réalisation ci-dessus, la couche 7 est formée par des zones 8a réfléchissantes constituées d'un premier matériau réfléchissant et des zones 8b non réfléchissantes constituées d'un second matériau non réfléchissant. Les zones 8a réfléchissantes peuvent être obtenues par métallisation, au travers d'un masque d'une plaque support non réfléchissante pour le faisceau lumineux 4 d'enregistrement des informations. Ce qui signifie que les zones 8b non réfléchissantes peuvent également être obtenues par absence du second matériau non réfléchissant. Les zones réfléchissantes peuvent être représentatives du marquage en positif ou l'être en négatif. Autrement dit, le masque peut laisser passer la métallisation pour représenter le marquage en positif ou au contraire le représenter en négatif.

Selon un autre mode de réalisation de l'invention, la couche 7 peut être formée par des zones 8a plus réfléchissantes et de zones 8b moins réfléchissantes. Selon la réflectivité de ces zones, le faisceau laser lors de l'enregistrement des informations sera plus ou moins réfléchi et réinsolera donc plus ou moins la résine 2.

Le même effet de modification des microcuvettes sera ainsi obtenu et le marquage sera également visible.

Dans ce cas, de la même façon que précédemment, les zones 8a plus réfléchissantes peuvent être représentatives du marquage en positif ou en négatif.

Selon encore un autre mode de réalisation de l'invention, alors que dans la figure 2, les zones 8a et les zones 8b ont été représentées séparées du support 1 muni de la couche de résine photosensible 2, et ont été décrites précédemment comme étant déposées sur une plaque support indépendante, le marquage constitué des zones 8a plus réfléchissantes et des zones 8b moins réfléchissantes ou des zones 8a réfléchissantes et des zones 8b non réfléchissantes pourra être formé directement sur la face du support 1 opposée à la face de ce support 1 qui est revêtue de la résine photosensible.

Les zones 8a plus réfléchissantes et les zones 8b moins réfléchissantes ou non réfléchissantes constituant le marquage pourront également être formées directement sur le plateau tournant 3 de la machine d'enregistrement.

Il faut également noter qu'une autre variante du procédé de fabrication du disque maître de l'invention consiste à, après l'étape d'élimination des zones de résine insolées, transférer les microcuvettes dans le support en verre 1, par gravure par plasma par exemple, et éliminer ensuite les zones de résine résiduelles. Dans ce cas, le disque maître est constitué du support 1 comportant à sa surface une succession de microcuvettes gravées dans le support lui-même.

Egalement, alors que le procédé de fabrication d'un disque maître selon l'invention a été décrit en utilisant une couche de résine photosensible de type positif, on pourra également utiliser une couche de résine photosensible de type négatif, mais dans ce cas, ce seront les zones de résine non insolées qui seront éliminées à l'étape notée (d) dans la figure 2.

A partir de ce disque maître, on pourra fabriquer une matrice de pressage de disques optiques et les disques optiques eux-mêmes.

Le marquage sera visible à l'oeil nu en raison de la diffraction de la lumière visible induite par les microcuvettes 8, correspondant aux microcuvettes 6 déformées, et représentatives du marquage et des informations à lire, qui est différente de la diffraction de la lumière visible induite par les microcuvettes 6 non déformées et représentatives des informations à lire.

Dans toutes les variantes et différents modes de réalisation du procédé de fabrication du disque maître décrits ci-dessus, le matériau réfléchissant ou non réfléchissant ou plus ou moins réfléchissant sera réfléchissant, non réfléchissant ou plus ou moins réfléchissant pour la lumière émise par le faisceau laser d'enregistrement.

Il apparaîtra à l'homme de l'art que tout matériau permettant de réfléchir le faisceau lumineux servant à l'enregistrement des informations sera approprié. Il saura également déterminer la nature de ces matériaux.

Egalement, alors que l'on a fait, dans la description du procédé de l'invention qui précède, référence à des matériaux différents, il faut comprendre que ce qui importe ici est la différence de réflectivité entre les différentes zones représentant le marquage.

Les étapes des différentes variantes du procédé de fabrication du disque maître de l'invention peuvent être intégrées dans un procédé de fabrication d'une matrice de pressage de disques optiques et dans un procédé de fabrication de disques optiques, sans modifier l'appareillage et dans tous les cas, ces procédés mèneront à l'obtention de disques optiques comportant un marquage visible à l'oeil nu mais non lisible par un appareil électronique et donc non copiable.

Bien entendu, l'invention n'est nullement limitée aux modes de réalisation décrits et illustrés qui n'ont été donnés qu'à titre d'exemples.

Ainsi, bien que dans les différents modes de réalisation décrits précédemment la couche 7 a été décrite comme formée de deux types de zones 8a et 8b de réflectivités différentes, elle pourra être formée d'un nombre supérieur de type de zones de réflectivités différentes, comme voulu.

C'est dire qu'elle comprend tous les équivalents techniques des moyens décrits, ainsi que leurs combinaisons, si celles-ci sont effectuées suivant son esprit.

## Revendications

1. Procédé de fabrication d'un disque maître pour la réalisation de matrices de pressage de disques optiques comportant un marquage, notamment anti-piratage du type consistant à :
(a) déposer sur une face d'un support (1) une couche de résine photosensible (2),
(b) déposer ce support (1) muni de la couche de résine photosensible (2) sur le plateau tournant (3) d'une machine d'enregistrement de disque maître,
(c) enregistrer les informations, à dupliquer et à lire ultérieurement dans un lecteur de disques optiques, sous forme d'image latente, dans la couche de résine photosensible (2) par défilement d'un faisceau lumineux (4) approprié,
(d) élimination de la résine photosensible dans les zones (5) de résine insolées, cette élimination menant à la création d'une succession de microcuvettes (6) représentatives de l'information à dupliquer,
caractérisé en ce que
(a') avant de procéder à l'étape (c) d'enregistrement des informations, on interpose entre le plateau tournant (3) de la machine d'enregistrement et le support (1) revêtu de la résine photosensible (2), une couche (7) formée par des zones (8a) d'un premier matériau et des zones (8b) d'un second matériau, ayant des réflectivités différentes pour les longueurs d'onde du faisceau lumineux (4), ces zones définissant un marquage (8).

2. Procédé selon la revendication 1 caractérisé en ce que ledit marquage (8) de la couche (7) est formé par des zones réfléchissantes (8a) d'un premier matériau réfléchissant pour les longueurs d'onde du faisceau lumineux (4) et des zones non réfléchissantes (8b) d'un second matériau non réfléchissant pour les longueurs d'onde du faisceau lumineux (4), les zones (8a) réfléchissantes représentant en positif le marquage (8).

3. Procédé selon la revendication 1 caractérisé en ce que le marquage (8) est formé par des zones réfléchissantes (8a) d'un premier matériau réfléchissant pour le faisceau lumineux (4) et des zones non réfléchissantes (8b) d'un second matériau non réfléchissant pour le faisceau lumineux (4), les zones (8b) de second matériau non réfléchissant représentant en positif le marquage (8).

4. Procédé selon la revendication 2 ou la revendication 3 caractérisé en ce que les zones non réfléchissantes (8b) sont obtenues en ne déposant pas ledit second matériau.

5. Procédé selon la revendication 1 caractérisé en ce que le marquage (8) est formé par des zones (8a) d'un premier matériau plus réfléchissant pour le faisceau lumineux (4) et des zones (8b) d'un second matériau moins réfléchissant pour le faisceau lumineux (4), les zones (8a) de matériau plus réfléchissant représentant en positif le marquage (8).

6. Procédé selon la revendication 1 caractérisé en ce que le marquage (8) est formé par des zones (8a) d'un premier matériau plus réfléchissant pour le faisceau lumineux (4) et des zones (8b) d'un second matériau moins réfléchissant pour le faisceau lumineux (4), les zones (8b) de second matériau moins réfléchissant représentant en positif ledit marquage (8).

7. Procédé selon l'une quelconque des revendications précédentes caractérisé en ce que la couche (7) est formée sur une plaque support indépendante.

8. Procédé selon l'une quelconque des revendications 1 à 6, caractérisé en ce que la couche (7) est formée directement sur le plateau tournant (3) de la machine d'enregistrement.

9. Procédé selon l'une quelconque des revendications 1 à 6, caractérisé en ce que la couche (7) est formée directement sur le support (1) sur la face de ce support opposée à celle comportant la couche de résine (2).

10. Procédé selon l'une quelconque des revendications précédentes caractérisé en ce que, après l'étape (d) d'élimination des zones (5) de résine insolées, on réalise les étapes suivantes :
(e) transfert dans le support (1) des microcuvettes obtenues à l'étape (d), et
(f) élimination des zones de résine résiduelle.

11. Disque maître comportant un marquage, notamment anti-piratage obtenu par le procédé selon l'une quelconque des revendications précédentes.

12. Procédé de fabrication d'une matrice de pressage de disques optiques comportant un marquage, notamment anti-piratage caractérisé en ce qu'il comprend les étapes de fabrication d'un disque maître selon le procédé selon l'une quelconque des revendications 1 à 10.

13. Matrice de pressage pour le pressage de disques optiques comportant un marquage, notamment anti-piratage obtenu par le procédé selon la revendication 12 ou à partir du disque maître selon la revendication 11.

14. Procédé de fabrication de disques optiques comportant un marquage, notamment anti-piratage caractérisé en ce qu'il comprend les étapes de fabrication d'un disque maître selon le procédé de l'une quelconque des revendications 1 à 10 et/ou les étapes de fabrication d'une matrice de pressage selon le procédé de la revendication 12.

15. Disque optique comportant un marquage, notamment anti-piratage obtenu par le procédé selon la revendication 14 ou à partir du disque maître de la revendication 11, ou de la matrice de pressage selon la revendication 13.
